(19) **Europäisches Patentamt**
**European Patent Office**
**Office européen des brevets**

(11) **EP 1 753 534 B1**

(12) **EUROPEAN PATENT SPECIFICATION**

(45) Date of publication and mention of the grant of the patent:
**08.10.2008 Bulletin 2008/41**

(51) Int Cl.:
***B01L 3/00*** *(2006.01)* ***B81B 3/00*** *(2006.01)*
***F15C 5/00*** *(2006.01)*

(21) Application number: **05740548.2**

(22) Date of filing: **09.05.2005**

(86) International application number:
**PCT/GB2005/001718**

(87) International publication number:
**WO 2005/107947 (17.11.2005 Gazette 2005/46)**

(54) **A VALVE FOR A MICROFLUIDIC DEVICE**

VENTIL FÜR EINE MIKROFLUIDVORRICHTUNG

VALVE POUR DISPOSITIF MICROFLUIDIQUE

(84) Designated Contracting States:
**AT BE BG CH CY CZ DE DK EE ES FI FR GB GR HU IE IS IT LI LT LU MC NL PL PT RO SE SI SK TR**

(30) Priority: **10.05.2004 GB 0410394**

(43) Date of publication of application:
**21.02.2007 Bulletin 2007/08**

(73) Proprietor: **E2V Biosensors Limited**
**Chelmsford**
**Essex CM1 2QU (GB)**

(72) Inventors:
• **ALLEN, Brian Philip**
**Toppesfield,**
**Essex CO9 4DS (GB)**
• **GILBERT, Richard**
**Chelmsford,**
**Essex CM2 6WY (GB)**

• **ZHOU, Xiao-Feng**
**Chelmsford,**
**Essex CM2 6SN (GB)**

(74) Representative: **Loveless, Ian Mark**
**Reddie & Grose**
**16 Theobalds Road**
**London**
**WC1X 8PL (GB)**

(56) References cited:
**WO-A-02/078845 WO-A-03/012325**
**US-A1- 2004 007 275**

• **SELVAGANAPATHY P ET AL: "Electrothermally actuated inline microfluidic valve" SENSORS AND ACTUATORS A, ELSEVIER SEQUOIA S.A., LAUSANNE, CH, vol. 104, no. 3, 15 May 2003 (2003-05-15), pages 275-282, XP004423410 ISSN: 0924-4247**

**Description**

The present invention relates to a microfluidic device and, in particular to a valve for microfluidic control of fluid flow.

Microfluidic devices are known apparatus for controlling small amounts of fluids such as reagents in chemical or biological applications. Such devices comprise a number of channels for transporting a fluid from an input port to a reaction or test chamber, where a predetermined reaction or test such as an assay, is arranged to occur. Common fluids used in microfluidic devices are blood samples, bacterial cell suspensions, protein or antibody solutions, and various buffers. Microfluidic devices allow measurements to be made of properties such as molecular diffusion coefficients, fluid viscosity, pH, chemical binding coefficients, and enzyme reaction kinetics.

So-called "lab-on-a-chip" devices require precise microfluidic technology to regulate fluid flow through various microchannels to enhance on-chip chemical processing. Some examples of the use of this technology include improving the storage of reagents, priming of channels, switching of liquid flow-streams, as well as isolating specific areas of the chip during sensitive steps in the chemical processing, to prevent leakage and pressure fluctuations.

Research in this field is currently undertaken to develop methods of regulating microfluidic flow within such a chip using a series of valves. Controlling such fluid flow is essential to the efficient performance of the device.

As a result, a number of valves have been developed in order to regulate the flow of fluid within a channel. These valves can be multiple use valves or of the single shot type.

One method of providing controlled fluid flow is to use conventional diaphragm valves. This normally involves using MEMS (micro electric mechanical systems) technology, based on silicon materials. Implementation and integration of such components, however, is complicated and very costly. US Patent No. 6,048,734, for example, describes a thermo-pneumatic valve comprising a corrugated diaphragm constructed as part of a test structure on a silicon chip. Similar types of valves, such as hydrophobic passive valves, are less complicated to implement and integrate, but only provide one-way fluid flow.

Another way of providing such controlled fluid flow is to use bead-based microfluidic valves, such as that described in Ji et al. (16th European Conference on Solid-State Transducers, September 15-18, 2002, Prague). In this design, a number of silica micro-beads are used to block off a fluid outlet to form a check-like valve. When fluid flows through the valve from a fluid inlet in the direct of the outlet, the fluid flow causes the beads to move towards the mouth of the outlet where they aggregate. If the volume of the aggregate is large enough then the valve effectively closes, and no more fluid flows through the outlet. As the size of the beads compared to the fluid inlet decreases, other factors such as electrostatic attraction and decreasing surface energy affect aggregation.

One disadvantage of this design.is that it is not possible to achieve a quick fluid flow cut-off, as in the MEMS valve described above, as it takes a finite period of time for the aggregate to achieve a sufficient.volume to close off the mouth of the fluid outlet.

Simpler concepts for controlling a liquid flow are to freeze the liquid itself, use a metal ball or some form of piezo electric to create a blockage temporarily in a fluid channel. Each of these solutions has disadvantages such as the time lag in controlling the flow - a particular problem with freezing the liquid. Bubble valves, which utilise various surface tension effects, are also known in the art. It is also known to create micrometer-sized pumps and valves by manipulating colloidal microspheres, described in Terray, Oakey and Marr, Science, vol. 296, pp 1841 - 1843, 2002). This uses the principle of optical trapping to manoeuvre the colloidal particles to control fluid flow.

US Patent No. 6,048,734, also describes, a device and method for blocking fluid flow in a channel. A side channel housing a heating element and a bead of solder is located in communication with the main channel in which the fluid is to flow. The heating element at least partially liquefies the solder and air flow moves the liquefied solder from the side channel into the main channel where it cools blocking the main channel. Such an arrangement is however unsuitable for lab-on-a-chip applications, as the high temperatures required to melt the solder would damage the chip itself. Also it is necessary to provide means for creating an airflow to move the melted solder into the desired position, thus wasting valuable space on the chip.

US Patent Application No. 2004/7275 A1 describes a valve according to the preamble of claim 1, in which heating causes a change in viscosity such that the valve material can be pushed by the fluid into an extended portion, opening the valve. Also, the paper Selvaganapathy P et A1 "Electrothermally actuated inline microfluidic valve" describes a valve using an expandable paraffin patch as an actuator.

Valves of this kind can therefore be complicated and costly to manufacture. The more complicated the design of the valve is the more likely it is to fail. We have appreciated therefore that there is a need for a valve which has a simple design and is simple to manufacture.

The invention is defined in the independent claims to which reference should now be made. Advantageous features are set forth in the dependent claims.

A preferred embodiment of the invention will now be described in more detail, by way of example, and with reference to the drawings in which:

Figure 1 illustrates a microelectrochemical device with which the invention could be used;

Figure 2 illustrates a preferred embodiment of the invention in an initial state;
Figure 3 illustrates the preferred embodiment in a final state;
Figure 4 illustrates an alternative embodiment of the invention in an open state;
Figure 5 illustrates the embodiment of Figure 4 in a closed state;
Figure 6 illustrates the distribution of carbon chain lengths for wax molecules in the simulation;
Figure 7 illustrates the arrangement of molecules in a test periodic cell;
Figure 8 is a plot illustrating the dependence of the periodic cell volume on the temperature;
Figure 9 is a plot illustrating the dependence of the pressure within the periodic cell on temperature;
Figure 10 is a plot illustrating the dependence of the density of the wax within the periodic cell on temperature;
Figure 11 is a plot showing calculated values for entropy, heat capacity, enthalpy, and the free energy for the simulated wax;
Figure 12 is an illustration showing the model structure for the shear analysis calculation of the wax in the simulation;
Figure 13 its a plot showing the velocity profile of the wax in the simulation at two different temperatures.

The preferred embodiment of the invention takes the form of a microfluidic device. A microfluidic device can be characterised by the fact that one or more of the channels has at least one dimension less than 1mm. In most applications however, a channel is typically around $50\mu m$ wide and about $50\ \mu m$ deep and carries nanolitres of reagent to the reaction or testing chamber.

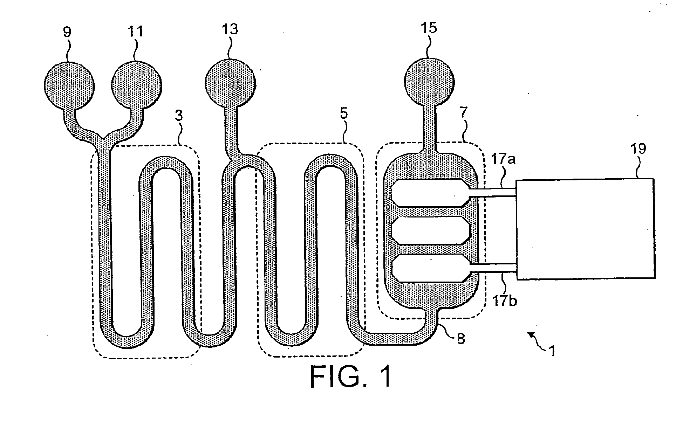

By way of example, a microfluidic electrochemical sensor will now be described with reference to figure 1.

Figure 1 is a schematic diagram of a microfluidic electrochemical reaction apparatus. The apparatus 1 comprises a first mixing channel 3, second mixing channel 5, and reaction chamber 7. The first mixing channel 3, second mixing channel 5, and reaction chamber 7 are connected so that fluid may pass, in turn, through the first mixing channel 3, through the second mixing channel 5, and into the reaction chamber 7 via chamber inlet 8. The up-stream portion of the first mixing channel 3 is connected to a substrate inlet 9, and an enzyme inlet 11 which supply the first mixing channel 3 respectively with substrate and enzyme. The up-stream portion of the second mixing channel 5 is connected to a mediator inlet 13, which supplies mediator to the second mixing channel 5. The reaction chamber 7 is connected to a waste outlet 15 which allows fluid to pass out of the reaction chamber 7.

One exemplary use of a reaction chamber is as an analytical component on a miniature bio-chip.

The substrate comprises molecules which may be electrochemically reacted with an enzyme in the reaction chamber 7. The substrate may comprise, for example, any one of a large array of xenobiotic compounds including drugs, pesticides and environmental pollutants. The enzyme may be any metabolising enzyme suitable for detoxifying the compound forming the substrate. Examples of such enzymes include proteins from the cytochrome P450 and flavin mono-oxygenase families. The mediator acts as a medium through which electrons may flow, and may be provided by any suitable electrically conductive fluid. The purpose of the mediator is to allow electrons to be transferred from an electrode 17, located inside the reaction chamber 7, to the enzyme, so that ain electrochemical reaction between the enzyme and the substrate may be induced. The substrate, enzyme, and mediator are all provided in a fluid form so that they may flow along the mixing channels 3, and 5.

In use, substrate is continually supplied to the first mixing channel 3 through substrate inlet 9 at a first predetermined flow rate, and enzyme is continually supplied to the first mixing channel 3 through enzyme inlet 11 at a second predetermined flow rate. The substrate and enzyme are combined in the first mixing channel 3, for example, by diffuse mixing. The resulting substrate/ enzyme mixture flows along the first mixing channel 3 to the second mixing channel 5. No reaction occurs between the substrate and enzyme in the first mixing channel 3 because no electrons are available to induce a reaction.

Mediator is continually supplied to the second mixing channel 5 through mediator inlet 13 at a third predetermined flow rate. Mediator is combined with the substrate/enzyme mixture in the second mixing channel 5, and the resulting substrate/enzyme/mediator mixture, hereinafter referred to as reagent mixture, flows through the second mixing channel 5 to the reaction chamber 7 via chamber inlet 8. The proportions of substrate, enzyme, and mediator in the reagent mixture entering the reaction chamber 7 are determined by the relative magnitudes of the first, second, and third flow rates, which may be adjusted to obtain a desired reagent mixture consistency. Reagent mixture is electrochemically reacted within the reaction chamber 7, and any unreacted reagent mixture, and reaction products are expelled through the waste outlet 15.

In order to regulate this kind of reaction, it is essential that the flow rates of each of the substrate, enzyme and mediator be carefully controlled. A valve for regulating the flow of a fluid in a microfluidic device, such as those described above, is therefore provided by the invention.

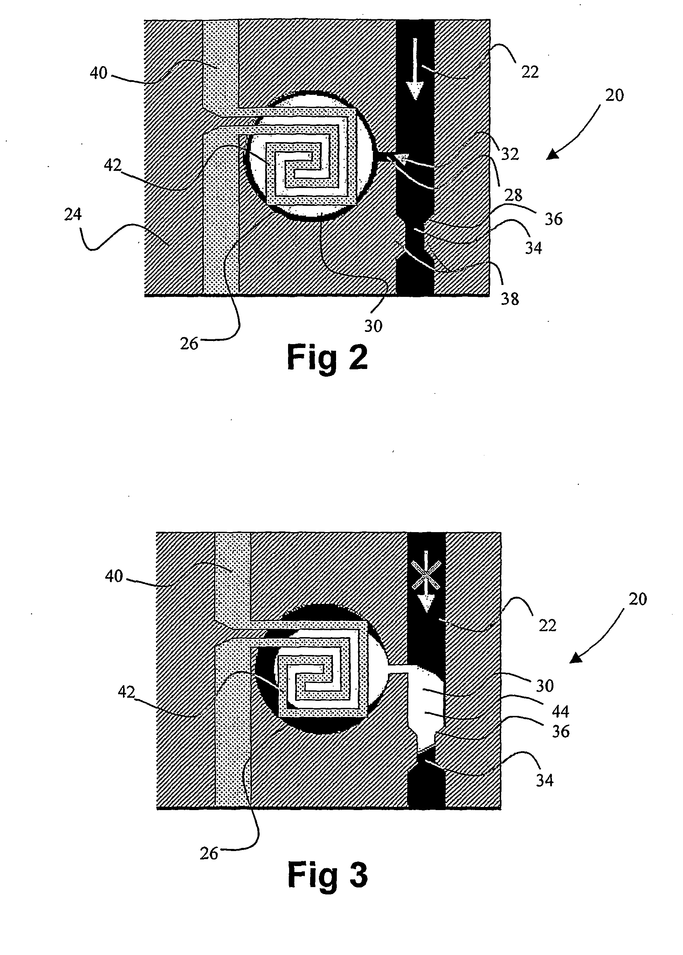

Referring to Figure 2, a valve according to the preferred embodiment of the invention will now be described in more detail.

The valve 20 comprises a main channel 22 through which fluid is arranged to flow. The channel is preferably formed on a plastic substrate 24 of polymethylmethacrylate (PMMA) so that it has a depth of about

50μm and a width or about 50μm.

The valve comprises a closed chamber or reservoir 26 connected to the main channel 22 by a narrow neck portion 28. The chamber has a volume of 0.25μl and houses a valve material which is preferably a pellet of solid paraffin wax 30. The pellet is disposed so that it fully occupies the chamber, and therefore has a mass of about 0.00233g assuming its density is 0.93g.cm$^{-1}$. The reservoir 26 is ideally formed to the same depth as the channel, namely 50μm. However the reservoir could be deeper, say 100μm, depending on the amount of wax it is to contain, and the depth restrictions of the chip in which it is formed.

The neck portion 28 joins the main channel 22 at an aperture 32 in the channel wall. Downstream of the aperture, a constriction 34 is formed in the channel 22. The constriction is comprised of a section of channel wall which tapers into the channel middle to provide a collar 36 opposing the flow of fluid. Although, in Figure 2, the collar is shown as having two opposing sections 38 jutting outwards from the two channel side walls, it preferably also comprises an elevated section (not shown) on the base of the channel (and a similar section on the roof of the channel) such that in the collar section the channel width and depth are both reduced. In practice, the constriction is therefore preferably a cylindrical collar of reduced internal diameter compared with the channel. The dimensions of the constriction are preferably 25 μm wide and 50 μm deep, or 25 μm by 25 μm.

A heating element 40 is formed over the substrate 24 using vapour phase deposition techniques or other known fabrication techniques. The heating element 40 has a heating coil 42 arranged to heat the pellet of wax 30 in the chamber 26. As shown in Figure 2, the chamber though circular is of substantially flat cross-section, and the heating coil 42 extends over the chamber in such a manner as to convey heat simultaneously to as much of the wax as possible. The heating coil therefore overlaps the chamber, and the pellet of wax inside. The heating coil 42 comprises a length of current carrying wire, which is folded back on itself to provide a double track structure in which wire sections are arranged side by side and coiled into a G shape.

The operation of the valve will now be described in more detail. The valve as shown in Figure 2 is in its open state, and a fluid can flow in the channel in the direction of the arrow. If it is desired to close the valve, and stop the flow in the channel, then a control signal is applied to a control circuit (not shown), which in turn causes current to flow in the heating element 40. The heat provided by the heating element liquefies the pellet of paraffin wax, which rapidly expands. As the chamber is otherwise closed, expansion of the liquefied wax causes some wax to pass through the neck portion and into the main channel. The liquefied wax flows out of the reservoir 26 and resolidifies in the cooler channel. The opposing sections of the collar 36 provide a surface on which the solidifying wax can amalgamate and cool further forming a blockage or plug 44 of solid wax, as shown in Figure 3. Liquefied wax continues to exit the aperture as long as the heating element generates heat, sufficient wax remains, and the aperture of the neck portion remains open. Resolidifying wax continues to build up behind the blockage of the collar portion therefore until the channel 22 is fully closed. The fully blocked channel means that the valve is then closed, as shown in Figure 3. The length of the wax deposit in the channel as shown in Figure 3 is approximately 2mm.

In Figure 3, when the wax expands and is caused to flow out of the reservoir 26, the quantity of wax remaining in the reservoir is shown as being reduced by a corresponding amount. The wax is shown in this way merely to illustrate that wax flows out of the reservoir. In practice however, when the wax is melted by the heating element it will liquefy and expand and continue to occupy the whole reservoir, even while wax flows out of the aperture 32.

The preferred embodiment relies on the rapid expansion of the wax when it liquefies in order to eject it from the wax reservoir. If the wax does not expand rapidly, there is a risk of it resolidifying as it emerges from the reservoir and the resultant flow of wax not being sufficient to block the fluid flow channel. For this reason, paraffin wax with a predominant carbon chain length of about 24 is preferred as the active valve material as it has been found to have a high coefficient of thermal expansion on melting. Preferably, the wax expands by 20% say over a temperature increase of about 5°C. Such a technique provides a simple reliable one-shot valve mechanism. No additional means of causing the melted valve material to flow into the channel are therefore required, unlike the device disclosed in US Patent No. 6,048,734 for example in which an air channel is necessary for ensuring that the melted solder is carried to the right location. Solder does not have a high thermal expansion coefficient. Furthermore, in the preferred embodiment, the shape of the reservoir prevents the wax from expanding in any direction other than into the fluid flow. Paraffin wax is preferred as it melts at temperatures considerably lower than those required for solder. This makes it suitable for application in all manufactures of chip, including plastic chips, not just in glass or silicon chips as for solder.

Solder typically has a melting point of over 100°C, which would melt a plastic chip, as well as denaturing the analyte being transmitted to the reaction chamber. The plastic chip and analyte are in fact likely to be damaged by temperatures of over 50°C, and even by temperatures of over human body temperature, namely 37°C. For this reason, it will be appreciated that it is important that the valve material has a low melting point, preferable lower than 50°C, and preferably lower than 37°C.

It is also important that the valve material has a low specific heat capacity is low so that it cools quickly. Paraffin wax is preferred therefore as it is essentially a glass structure; it therefore requires less energy to form a solid because there is no crystalline energy gap in the way that there is when a liquid changes to a solid, crystalline form. The terms 'liquefy' and 'melting' in the above description should not therefore be taken to necessarily denote a change of physical state of the material, but should be taken rather to mean the way the material behaves in practical terms.

The amount of current, and heat supplied by the heating element is controlled by the controller circuit and is dependent on the desired switching speed as well as the quantity of wax in the chamber and the properties of the wax itself. Assuming that the desired switching speed is 100ms, the required heating power for the 0.00233g of paraffin wax is 780mW.

The preferred embodiment is formed on a plastic substrate as it is a cheap, easily moulded material. Although PMMA is used in the embodiments described above, other materials such as PDMs, polycarbonate or polyamide could also be used. The device may also be formed on a silicon wafer where the implementation makes this preferable.

In the embodiments described above, the flow of wax ejected from the reservoir can be seen to be in the downstream direction, that is in the direction of the fluid flow. The constriction in the channel is therefore located downstream so that the wax is encouraged to solidify at the particular location of the constriction. Whether the wax flows downstream with the fluid or wicks out in both upstream and downstream directions as a result of capillary action and the general expansion driving forces depends upon the specific implementation including the fluid flow rate, viscosity, heating and cooling rate of the wax.

Preferably therefore, the fluid flow channel comprises a constriction in both the downstream and upstream directions of the aperture 32.

Although it is not shown in the diagrams, the neck portion 28 preferably comprises a stop at the edge of the reservoir to prevent the wax from escaping during manufacture of the valve device. The stop is preferably a frangible feature such as a hydrophobic patch. The wax is retained behind the patch until it is heated, at which point pressure forces the wax across the patch and out of the reservoir.

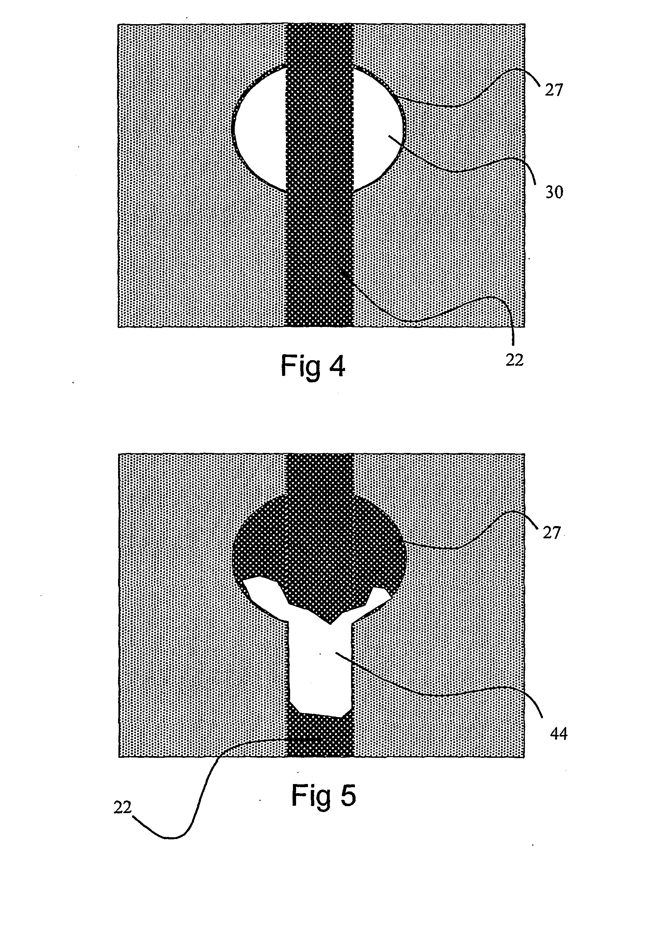

An alternative embodiment of the invention is shown in Figures 4 and 5 to which reference should now be made.

In Figure 4, a fluid flow channel 22 is shown. However, instead of a reservoir 26, a cavity 27 is provided in the channel wall, and a valve material, such as paraffin wax, is provided in the cavity 27. In an initial state, the paraffin wax does not block the fluid flow channel. However, when heated by a heating element (not shown) the wax 30 melts, and passes into the channel where it cools and forms a blockage 44. This state is shown in Figure 5. As before, constrictions in the upstream, or downstream direction may be provided, as well as a stop in the cavity to prevent the wax from entering the channel during manufacture.

In this arrangement, by providing the valve material in an enlarged portion of the channel, it is not necessary for the valve material to have a high thermal expansion coefficient. This is because up on melting, the valve material will be pushed by the fluid flow into the channel where it cools and resolidifies as a non-porous plug.

Alternatively, the valve material may be a porous material located in the channel, which on meting forms a non-porous solid blocking the channel.

As described earlier, the materials properties of the valve material are critical to the operation of the preferred embodiment. It should be chemically stable and inert, have a low melting point and specific heat capacity, flow readily when liquid, and have a high thermal expansivity when heated. Furthermore, it is preferably viscous and immiscible in the fluid in the channel. For this reason, paraffin wax is preferred as the valve material. To illustrate the reaction of the paraffin wax in the preferred embodiment, a simulation was carried out. This will now be described in more detail below.

A typical paraffin wax was modelled as a mixture of long-chain hydrocarbons, and various thermal simulations were then performed to assess the suitability of this material for use in the stop valve according to the

preferred embodiment.

Paraffin wax is a complex mixture of different hydrocarbons, comprising primarily (ca. 90%) straight chain alkanes with lengths ranging from around 18 to 30 carbons. The remaining 10% comprises branched and fused chains with sizes roughly equivalent to the straight-chain molecules. Since alkanes do not have any reactive functional groups, they are chemically very stable and relatively inert.

A 25Å cubic periodic cell was used to contain the wax molecules. In a periodic cell model, the molecules on one side of the cell are able to interact mathematically with those on the opposite side, allowing an 'infinite' bulk 3D material to be simulated using a reasonably small number of atoms and stacking the cells together in all three dimensions. The periodic cell was filled with wax molecules to give a final density of approximately 0.85-0.95g.cm-1, which is the density of a typical paraffin wax. To simplify the computational task, the wax was modelled using only straight-chain compounds. A real wax, with a slightly greater variety of constituents, would be expected to exhibit only slightly different properties to those of the model.

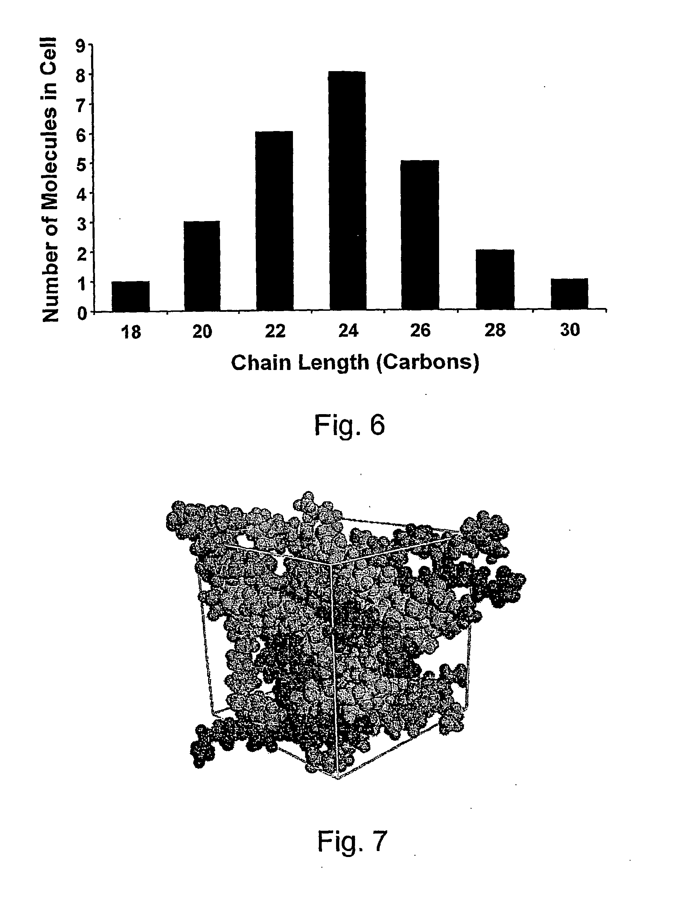

The periodic cell was constructed to contain 26 molecules, with a distribution of chain lengths as shown in Figure 6. This composition was chosen to simulate a material with chain lengths ranging from 18 to 30 carbons according to a Boltzmann distribution centred around a C24 chain. This distribution gave a material with a density of 0.930307g.cm-3, containing 1,906 atoms (618 carbons and 1,288 hydrogens) per periodic cell. The average molecular mass was 334.769, slightly less than that of a 24-carbon alkane chain, which has a molecular mass of 338.664.

The model was relaxed by following a simulated annealing procedure whereby the initial structure (at OK) was heated to 500K over a 25ps period, then cooled back to standard room temperature (298.15K) over a 50ps period. The resulting model is shown in Figure 7, with each molecule shown in a different shade of grey. During the simulation calculations, the parts of the molecules extending out of the cube are mathematically 'folded back' into the voids on the opposite side, thereby simulating a fully-packed bulk material.

Paraffin waxes do not show the typical phase changes normally observed when a pure compound melts and then boils. At room temperature, they form solids with a pseudocrystalline state similar to glass. As the waxes are heated, they undergo a phase transition to a more liquid form (colloquially referred to as 'melting'), which can then boil to form a vapour phase. The boiling is unusual

in that the smaller molecular components typically evaporate before the heavier ones, giving rise to a series of 'blips' in the thermal and material properties of the wax as the temperature increases.

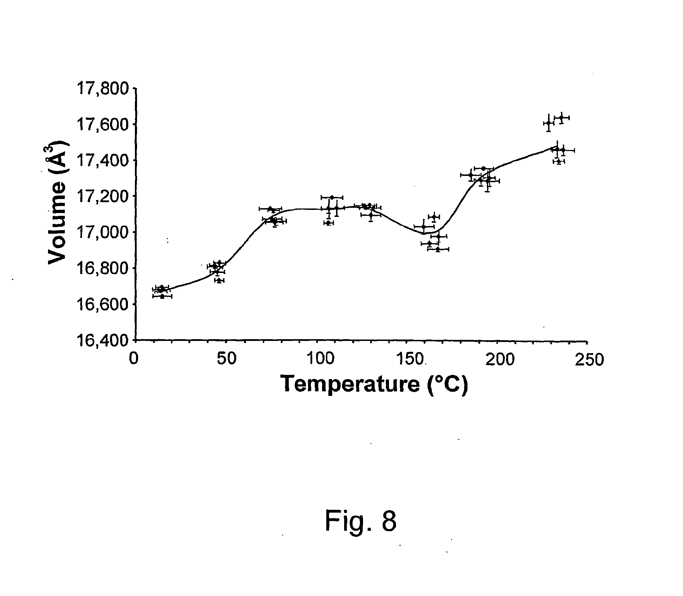

The thermal properties of the wax were predicted by simulating the behaviour of the material over a temperature range suitable for lab-on-a-chip devices. The chart in Figure 8 shows how the volume of the periodic cell changes as a function of temperature, and therefore is a prediction of the thermal expansivity properties of the bulk material.

As noted above, the thermal expansivity of the wax is critical in ensuring that on heating, the wax expands a sufficient amount to at least partly exit the chamber and form a blockage in the channel.

The simulations were repeated five times each in order to minimise the effect of modelling a bulk material by using only a very small periodic cell volume in which individual atoms and molecules have a disproportionately large influence on the behaviour of the system as a whole. The 'error bars' are an indication of the thermal variability within the system, and represent one standard deviation from the average value observed within the system over a 5ps period at the appropriate temperature. Each simulation was performed at a constant pressure of 1 atmosphere, and was allowed to transfer energy to/ from the environment. This enabled the thermal expansion properties of the wax to be modelled, since the periodic cell was required to change size in order to maintain the constant pressure.

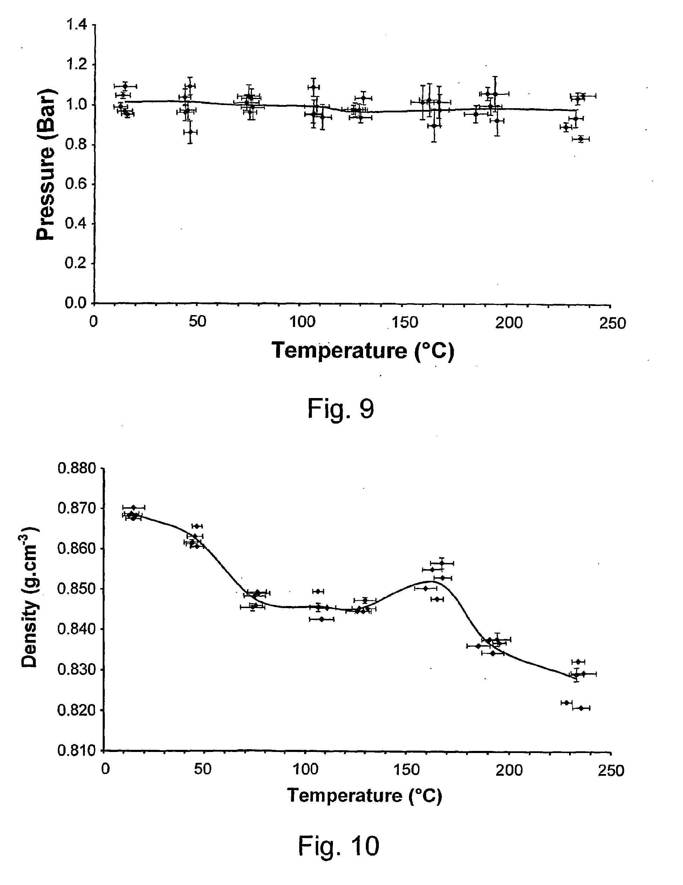

Plots of how the pressure and density vary with temperature are shown in Figures 9 and 10. The pressure remains essentially constant throughout the simulations, and the density varies with an inverse relationship to the periodic cell dimensions.

From its material safety data sheet, the melting point of paraffin wax is 54-58°C, and the boiling point is 350-370°C, depending on the exact molecular composition. As the temperature approaches 160°C white smoke comes off the surface of the wax, indicating that some of the lower molecular weight components are leaving the bulk material as vapour, then re-crystallising as smoke particles when they cool. The thermal simulations show a phase transition at the expected melting point, and a dip in volume and consequent rise in density as the temperature approaches 160°C, so it can be concluded that the model is reliably reproducing of the behaviour of a real paraffin wax.

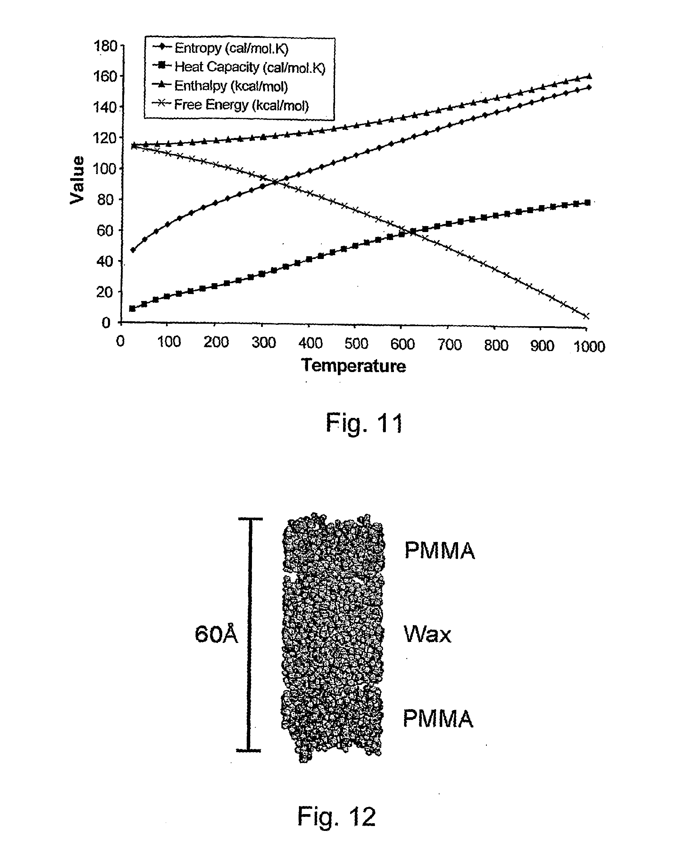

By performing a perturbation analysis on the structural model, it is possible to calculate a variety of additional thermodynamic properties, and how they vary with temperature. These are shown in Figure 11. The enthalpy is a measure of how much energy is stored in the chemical structure itself. The entropy indicates how much 'non-bonded' energy, such as thermal vibrations/ rotations, can be.stored in the material. The free energy gives an indication of the chemical stability of the material and the heat capacity indicates how much energy is required to change the temperature of the material by one degree Kelvin.

At room temperature, the heat capacity of the wax is predicted to be 32.032cal/mol.K, which means that it requires 32.032 calories (134.02 Joules) to raise the temperature of one mole-equivalent of wax (334.8 grams) by 1 degree Kelvin. At 100°C, this rises to 39.554cal/mol.K. This means that it would require 2684.5 calories (11.232kJ) to heat 334.8g of wax from room temperature to 100°C.

Assuming that the microfluidic channel has dimensions of around 50x50$\mu$m, and that the valve is closed.by blocking a 2mm length of the channel, a volume of 5nl of wax is needed to block the channel. The periodic cell volume increased by approximately 3% over this temperature range, so a wax 'reservoir' of 0.1633ml is required to supply the desired volume of wax. A wax reservoir of 0.25ml is therefore preferred to allow for a reasonable safety margin.

Since the density of the wax is 0.93g.cm-3, 0.25ml of wax weighs 0.002325g. A heat capacity calculation can be used to determine that 0.01864 calories (0.0780 Joules) are required to melt the wax in the valve. Assuming that the valve is to be switched in 100ms, this equates to a required heating power of 780mW, which is within the capabilities of a resistive microelectronic heating element.

Of course, much of the thermal energy from the heating element will be transferred into the surrounding chip structure, so the actual power needed would be somewhat higher than this (or alternatively, the switching speed would be slower).

However, the actual flow due to heating of a material is not simply a function of the dimensional changes in the periodic cell used to model the bulk material.

The periodic cells at the edges of the wax pellet interact with the walls of the microfluidic chip and with the liquid within the microfluidic channels, whereas the periodic cells in the body of the wax simply interacting with identical copies of themselves in all directions. It is therefore necessary to model the interactions of the wax with the different materials at each interfacial surface in order to model how the material adheres to the chip substrate and how it flows when molten.

In the preferred embodiment, the chip substrate material is preferably a plastic. Polymethylmethacrylate (PMMA) was therefore chosen as the substrate material for the simulation, since it has chemical properties most similar to the other potential plastics from which the chip may be fabricated (PDMS, polycarbonate, polyamide, etc.). Different substrate materials would be expected to have somewhat different properties, but this should not lead to results too dissimilar from the results of this simulation.

It is not practicable to model a wax flowing past a single polymer wall, since this would involve a net transport of material out of the wax layer's periodic cell. Instead, a shear analysis was performed to predict the mechanical properties of the material. In a shear analysis, a sandwich structure is built with a thin layer of wax between two polymer walls. Each wall is then moved in opposite directions (for example the top wall moves right at 1mm.s-1, and the bottom wall move left at the same speed). There is therefore no net transport of material from the periodic cell, since atoms that 'leave' from the top wall re-enter the cell on the bottom wall. The wax is sheared between the two walls, enabling thee viscosity, surface adhesion and expansivity to be calculated. The shearing simulation was run over a range of temperatures, giving rise to the test material's performance profile.

The shear analysis model structure is shown in Figure 12. A 30Å-thick layer of wax was sandwiched between two 15Å-thick layers of PMMA. The top PMMA layer was moved to the right at 5mm.s-1, and the bottom was moved towards the left at the same speed. The distance between the two PMMA 'walls' was maintained by including a stiff simple harmonic spring connecting them together in the mathematical model.

The material's velocity profile was then calculated by simulating the system at room temperature (298.15K) and 100°C (373.15K) averaged over a period of 50ps (below, with 'error bars' of 1 standard deviation) to give an indication of the viscous flow characteristics of the material at these two temperatures.

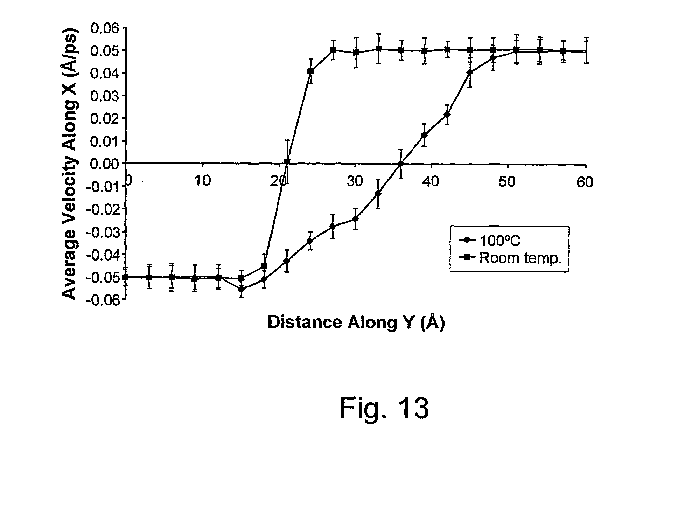

The velocity profiles shown in Figure 13 indicate that at 100°C the wax has a smooth; almost linear flow profile between the two PMMA walls and is therefore acting as a slightly viscous liquid. At room temperature, however, there is a sharp transition in the velocity profile between the bottom wall and the wax, indicating that the wax has 'peeled away' from this wall and is acting as a solid which is still attached to the top wall.

The bulk viscosity, $\eta_v$, is related to the decay of fluctuations in the diagonal elements of a matrix describing the stress within the wax layer as follows:

$$\eta_v = \frac{V}{kT} \int_0^\infty \langle \delta S(t).\delta S(0) \rangle dt$$

where t is time, V is the volume of the material, T is the temperature, k is Boltzmann's constant, and $\delta S = S - \langle S \rangle$, equivalent to the off-diagonal elements of the instantaneous stress tensor. Performing this calculation on the data generated by the shearing simulation predicts the viscosity of the molten wax to be 5.93 centistokes. The wax materials data sheet gives the experimentally-determined value a range between 2.9-7.5 centistokes, depending on the wax composition.

The modelling shows that a paraffin wax with a carbon chain length of 24 is a suitable material for a microfluidic valve. It would melt at around 55°C, flow easily at temperatures between 65 and 100°C, and rapidly resolidify. A resistive microelectronic heating element could switch the valve in 100ms, using a power of 780mW.

Thus, a valve for controlling fluid flow in a microfluidic device is realised, that is easy and cheap to manufacture, and is reliable in operation, since the only moving part is the valve material that undergoes a change of state. As a result, "lab-on-a-chip" devices in which fluid flow is to be regulated can also be made more cheaply and more reliably.

Although the preferred embodiment comprises a micro valve for a micro fluidic device, it will be appreciated the operation of the valve is not dependent or limited by the scale of the device. Alternative embodiments may therefore be made to a larger scale, up to the centimetre scale for example, or to smaller length scales, where this is practical and/or manufacturing tolerances permit.

Furthermore, although dimensions have been given for the different structural features of the referred embodiment these are intended only to aid explanation. It will be appreciated that a number of factors such as the dimensions of the reservoir, the amount, density, and heat capacity of the valve material, the channel dimensions and so on, all.affect the operation of the device, but could be varied according to requirements. Given information about the desired performance of the valve, all of these factors could however be calculated in a relative straightforward way, as indicated above for the example involving paraffin wax.

Furthermore, although paraffin wax is preferred other materials could also be used as the valve material, depending on the desired performance of the device, and providing the coefficient of expansion with heat of the materials is sufficient for them to be expelled from the reservoir by the heating of the heating element such that they block the channel, or providing the melting point is low enough. Other waxes or oils, such as silicone based greases, as well as thermo expansive polymers and foams, could be used. Silicone based oils and greases are convenient as they can be made to order with a specific melting point. Where it is not necessary for the chip to operate at temperatures lower than 50°C, then a temperature range for the melting point of 50°C to 80°C is preferred.

In addition to standard paraffin wax, which is a mixture of various hydrocarbons, certain pure hydrocarbons have also been found to be suitable. An example is hexatriacotane (CH36H72).

Liquid crystal elastomers are also suitable, as they can contract or expand as the thermal conditions change. For example, acrylate-based elastomers have been found to work well, as they can change their linear dimensions by up to 35%.

Thus, a preferred microfluidic valve has been described in which a valve material of wax is arranged to expand across a temperature difference from a chamber to a valve seat. No means for causing the valve material to move to block the valve are therefore required other than a heat source to provide the temperature gradient.

**Claims**

1. A valve for controlling fluid flow in a microfluidic device, comprising: a channel (22) for transporting fluid; a chamber (26) connected to the channel; a heating element (42) for heating the chamber; and a valve material (30) disposed in the chamber; **characterised in that,** in use, the heating element (42) is arranged to heat the valve material (30) such that it expands out of the chamber (26) and blocks the channel (22).

2. A valve according to claim 1, wherein the chamber (26) is in communication with the channel (22) by a neck portion (28) located between the channel (22) and the chamber (26).

3. A valve according to claim 1 or 2, wherein the heating element (42) is arranged to overlap the chamber (26).

4. A valve according to any preceding claim, wherein the channel (22) comprises a constriction (34) downstream of the valve material.

5. A valve according to any of claims 1 to 4, wherein the channel (22) comprises a constriction upstream of the valve material.

6. A valve according to claim 4 or 5, wherein the constriction (34) comprises a collar in the channel (22) having surfaces which oppose the fluid flow.

7. A valve according to any preceding claim in which the valve material (30) has a high coefficient of expansion on melting, and is arranged to melt such that it expands to fill the channel (22).

8. A valve according to claim 7, wherein the valve material (30) has a low melting point such that when heated it melts to block the channel (22) without damaging the fluid or the channel (22).

9. A valve according to claim 7 or 8, wherein the valve material (30) has a melting point of less than 50°C.

10. A valve according to claim 7 or 8, wherein the valve material (30) has a melting point of less than 37°C.

11. A valve according to any preceding claim, wherein the valve material (30) is solid wax.

12. A valve according to claim 11, wherein the valve material (30) is paraffin wax.

13. A valve according to claim 12, wherein the paraffin wax has a typical carbon chain length of 24.

14. A valve according to claim 1, wherein the valve material (30) has a high thermal expansion coefficient.

15. A microfluidic device comprising a valve according to any preceding claim.

16. A micro electro-chemical reaction device comprising a valve according to any of claims 1 to 14.

**Patentansprüche**

1. Ventil zum Regeln des Fluiddurchflusses in einer Mikrofluidvorrichtung, das Folgendes umfasst: einen Kanal (22) zum Transportieren von Fluid; eine mit dem Kanal verbundene Kammer (26); ein Heizelement (42) zum Erhitzen der Kammer; und ein in der Kammer angeordnetes Ventilmaterial (30); **dadurch gekennzeichnet, dass**
das Heizelement (42) beim Gebrauch die Aufgabe hat, das Ventilmaterial (30) zu erhitzen, so dass es sich aus der Kammer (26) hinaus ausdehnt und den Kanal (22) blockiert.

2. Ventil nach Anspruch 1, wobei die Kammer (26) mit dem Kanal (22) über einen Halsabschnitt (28) in Verbindung ist, der sich zwischen dem Kanal (22) und der Kammer (26) befindet.

3. Ventil nach Anspruch 1 oder 2, wobei das Heizelement (42) so angeordnet ist, dass es die Kammer (26) überlappt.

**4.** Ventil nach einem der vorherigen Ansprüche, wobei der Kanal (22) eine Verengung (34) unterhalb des Ventilmaterials aufweist.

**5.** Ventil nach einem der Ansprüche 1 bis 4, wobei der Kanal (22) eine Verengung oberhalb des Ventilmaterials aufweist.

**6.** Ventil nach Anspruch 4 oder 5, wobei die Verengung (34) einen Kragen in dem Kanal (22) mit Flächen aufweist, die dem Fluiddurchfluss entgegenwirken.

**7.** Ventil nach einem der vorherigen Ansprüche, wobei das Ventilmaterial (30) einen hohen Ausdehnungskoeffizienten beim Schmelzen hat und so gewählt ist, dass es so schmilzt, dass es sich ausdehnt und den Kanal (22) füllt.

**8.** Ventil nach Anspruch 7, wobei das Ventilmaterial (30) einen niedrigen Schmelzpunkt hat, so dass es beim Erhitzen schmilzt und den Kanal (22) blockiert, ohne das Fluid oder den Kanal (22) zu beschädigen.

**9.** Ventil nach Anspruch 7 oder 8, wobei das Ventilmaterial (30) einen Schmelzpunkt unter 50°C hat.

**10.** Ventil nach Anspruch 7 oder 8, wobei das Ventilmaterial (30) einen Schmelzpunkt unter 37°C hat.

**11.** Ventil nach einem der vorherigen Ansprüche, wobei das Ventilmaterial (30) festes Wachs ist.

**12.** Ventil nach Anspruch 11, wobei das Ventilmaterial (30) Paraffinwachs ist.

**13.** Ventil nach Anspruch 12, wobei das Paraffinwachs eine typische Kohlenstoffkettenlänge von 24 hat.

**14.** Ventil nach Anspruch 1, wobei das Ventilmaterial (30) einen hohen Wärmeausdehnungskoeffizienten hat.

**15.** Mikrofluidvorrichtung, die ein Ventil nach einem der vorherigen Ansprüche umfasst.

**16.** Mikroelektrochemische Reaktionsvorrichtung, die ein Ventil nach einem der Ansprüche 1 bis 14 aufweist.

**Revendications**

**1.** Valve pour contrôler l'écoulement de fluide dans un dispositif microfluidique, comprenant: un canal (22) pour transporter le fluide; une chambre (26) connectée au canal; un élément chauffant (42) pour chauffer la chambre; et une matière de valve (30) disposée dans la chambre; **caractérisée en ce que** en emploi, l'élément chauffant (42) est arrangé pour chauffer la matière de valve (30) de sorte qu'elle se dilate hors de la chambre (26) et bloque le canal (22).

**2.** Valve selon la revendication 1, dans laquelle la chambre (26) est en communication avec le canal (22) par une partie de goulot (28) située entre le canal (22) et la chambre (26).

**3.** Valve selon la revendication 1 ou 2, dans laquelle l'élément chauffant (42) est arrangé pour recouvrir la chambre (26).

**4.** Valve selon l'une quelconque des revendications précédentes, dans laquelle le canal (22) comprend un étranglement (34) en aval de la matière de valve.

**5.** Valve selon l'une quelconque des revendications 1 à 4, dans laquelle le canal (22) comprend un étranglement en amont de la matière de valve.

**6.** Valve selon la revendication 4 ou 5, dans laquelle l'étranglement (34) comprend un collier dans le canal (22) ayant des surfaces qui s'opposent à l'écoulement de fluide.

**7.** Valve selon l'une quelconque des revendications précédentes, dans laquelle la matière de valve (30) a un coefficient de dilatation élevé en fondant et est arrangée pour fondre de sorte qu'elle se dilate afin de remplir le canal (22).

**8.** Valve selon la revendication 7, dans laquelle la matière de valve (30) a un faible point de fusion de sorte que lorsqu'elle est chauffée, elle fond pour bloquer le canal (22) sans endommager le fluide ou le canal (22).

**9.** Valve selon la revendication 7 ou 8, dans laquelle la matière de valve (30) a un point de fusion de moins de 50°C.

**10.** Valve selon la revendication 7 ou 8, dans laquelle la matière de valve (30) a un point de fusion de moins de 37°C.

**11.** Valve selon l'une quelconque des revendications précédentes, dans laquelle la matière de valve (30) est de la cire solide.

**12.** Valve selon la revendication 11, dans laquelle la matière de valve (30) est de la cire de paraffine.

**13.** Valve selon la revendication 12, dans laquelle la cire de paraffine a typiquement une longueur de chaîne carbonée de 24.

**14.** Valve selon la revendication 1, dans laquelle la matière de valve (30) a un coefficient de dilatation thermique élevé.

**15.** Dispositif microfluidique comprenant une valve selon l'une quelconque des revendications précédentes.

**16.** Dispositif de réaction micro-électro-chimique comprenant une valve selon l'une quelconque des revendications 1 à 14.

FIG. 1

**Fig 2**

**Fig 3**

**Fig 4**

**Fig 5**

Fig. 6

Fig. 7

Fig. 8

Fig. 9

Fig. 10

Fig. 11

Fig. 12

Fig. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6048734 A

- US 20047275 A1

**Non-patent literature cited in the description**

- **JI et al.** *16th European Conference on Solid-State Transducers,* 15 September 2002

- **OAKEY ; MARR.** *Science,* 2002, vol. 296, 1841-1843